# EUROPEAN PATENT SPECIFICATION

(11) **EP 3 344 420 B1**
(45) Date of publication and mention of the grant of the patent: **19.07.2023**
(21) Application number: 16842418.2
(22) Date of filing: 31.08.2016
(51) Int. Cl.: B29C 65/02, B29C 65/04, B25F 5/02, H01H 9/06, H02J 7/00, B29K 27/06

(54) **CORDLESS WELDING APPARATUS**
KABELLOSE SCHWEISSVORRICHTUNG
APPAREIL DE SOUDAGE SANS FIL

(30) Priority: 31.08.2015 SE 1551123
(43) Date of publication of application: 11.07.2018
(73) Proprietor: Conroy Medical AB, 194 63 Upplands Väsby (SE)
(72) Inventor: JANSSON, Per, 193 41 Sigtuna (SE)
(74) Representative: Brann AB
(86) International application number: PCT/SE2016/050817
(87) International publication number: WO 2017/039519

(56) References cited:
- EP-A1- 1 594 209
- EP-A2- 1 598 171
- WO-A2-2008/041207
- WO-A2-2008/041207
- WO-A2-2013/177423
- JP-A- H07 195 523
- JP-A- 2002 011 793
- JP-A- 2002 011 793
- US-A1- 2013 193 891
- US-A1- 2014 181 167

## Description

The present disclosure relates in general to handheld electrically powered apparatuses, and in particular apparatuses with connectable/disconnectable power units/battery packs. More particularly it relates to plastic welding apparatuses.

### Background

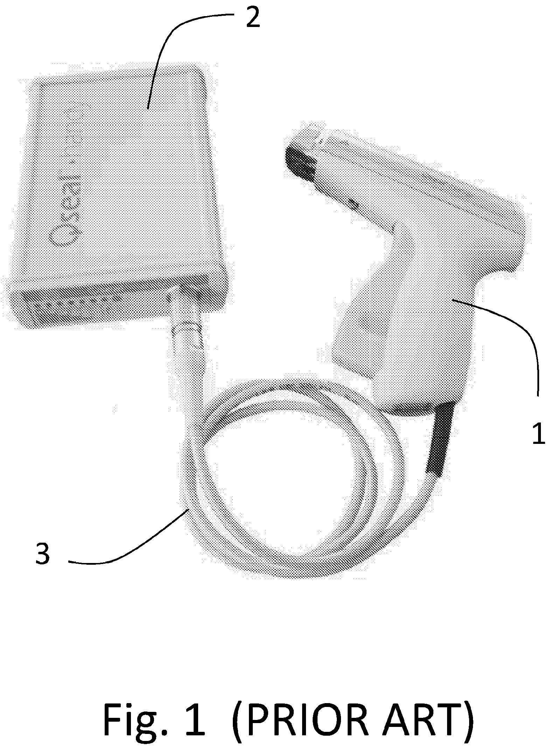

When sealing different containers designed to contain blood, such as blood bags, welding techniques (ultrasound or RF) are normally used. Such a product (CS546 Qseal-handy) is provided by Conroy Medical, and is shown in Fig. 1. It comprises a battery pack 2 (i.e. a DC source), a device for welding 1, which is normally hand-held, and a cord/cable 3 for connecting the battery pack with the hand-held device. The device can also be powered from the AC mains via a suitable cord. The Qseal-handy is a fully automatic system for sealing PVC and EVA tubes connected to blood bags included either in Blood Packs or in Apheresis Disposable Sets. The sealing can be performed when the donor is still connected to the Blood Pack or the Apheresis Disposable Set.

The presence of a cord/cable renders the device difficult to handle in certain circumstances.

In JPH06106623 (A) (Kawasumi) a hand held welding device for seal tubing is disclosed (see Fig. 2). It comprises a battery pack 5 that is directly attached to the welding part 4, thereby eliminating the power cord. It also comprises a voltage converter for raising the battery voltage (a DC booster) and a high performance DC/AC converter.

### Summary of the invention

The object is to provide improvements in cordless, i.e. battery powered devices for plastic welding.

This object is achieved by a cordless, hand held and electrically powered apparatus, comprising welding unit, a power unit for powering the welding unit, wherein the power unit is connectable directly to and disconnectable from the welding unit via an interface. The welding unit and the power unit each comprise circuitry that are configured to exchange information when mounted together via the interface, the information being used for a determination whether the power unit is a correct one or not. The determination is performed by the circuitry of the welding unit in a verification step by receiving the information from the circuitry of the power unit. The circuitry is configured to perform the verification step by checking at least one feature of the power unit for correctness and to block activation of the welding unit if the at least one feature is incorrect. The at least one feature comprises charge status of the power unit, the information being indicative of the actual charging state of the power unit, wherein the power unit is determined to be a correct one if the actual charging state of the power unit indicates that the amount of stored energy is appropriate for a welding operation that is to be performed. The power unit is provided with a push button that is configured to energize the welding unit when pressed down, thus initiating operation thereof. The advantage is that the apparatus can be made more compact, and thereby ease of handling is improved.

Preferably, the welding unit and the power unit each comprise circuitry configured to exchange information when mounted together via the interface. The information is usable for a determination whether the power unit is a correct one or not.

The interface suitably comprises at least two contact members capable of transferring power from the power unit and means for exchanging information between the power unit and the welding unit. It can also comprise at least one further contact member for information exchange.

The circuitry is preferably configured to check at least one feature of the power unit for correctness and to block activation of the welding unit if at least one feature is incorrect. Said feature can be selected form any of output voltage, charge status, and identity of the power unit.

The verification performed by the electronic circuitry will prevent the power button from initiating operation if verification of correctness of the power unit is not obtained.

In a further embodiment the apparatus comprises wireless communication means adapted to exchange information with other equipment. The wireless communication means can be selected from any of radio means, blue-tooth, wifi, light communication means, preferably in the infrared region.

Suitably, the welding unit further comprises a DC booster for enabling power unit having a low output voltage.

The apparatus is suitably energized by pressing the push button only if a determination that the power unit is a correct one has been registered by the circuitry.

In a further aspect there is provided a power unit, connectable to a welding unit of a handheld electrically powered apparatus, said power unit comprising a push button coupled to a switch, preferably a microswitch, and configured to provide electrical connection between then power unit and the welding unit of the apparatus, when said button is pushed on.

The power unit can also comprise identity means configured to cooperate with an apparatus according to claim 1 for identification of the unit.

In particular the power unit forms a handle for the apparatus.

There is also provided for wireless (IR, blue-tooth, wi-fi etc.) communication between the apparatus and other peripheral equipment, such as blood transfusion equipment e.g. for the purpose of reporting status of the operation performed.

In preferred embodiments the welding unit is cordless and which still maintains functionality regarding quality. Namely, if cheap copies of the power unit are used there is a risk that the quality of the weld will not be adequate due to inferior performance of the power unit.

This is achieved by providing the welding equipment in two units that interact with each other when mounted together. The first unit (power unit) comprises an energy source, a communication and control circuitry and a power pushbutton; and the second unit (welding unit) comprises communication and control circuitry (a processor), a DC booster and a welder.

The power unit may be replaced by a charged power unit when the energy content is too low.

### Brief description of the drawings

Embodiments of the invention will be described with reference to the appended drawing figures in which
Fig. 1 is an example of a prior art device shown in a side view;
Fig. 2 is an example of another prior art device in a side view;
Fig. 3 schematically shows a side view of a welding apparatus comprising two connectable parts;
Fig. 4 schematically shows a view of the welding apparatus of Fig. 2 in assembled state;
Fig. 5 is a schematic illustration of the apparatus and its control circuitry; and
Fig. 6 is a schematic view of the interface between power unit and application unit.

### Detailed description of embodiments

For the purpose of this patent application the following terms shall be taken to have the following meanings.

Power unit means a separate unit that is capable of being charged with electrical energy and to store it.

Battery pack is the actual electric cells within a power unit.

Welding unit is a unit that is powered by a power unit and which is capable of performing a welding operation.

Generally the disclosure herein is directed to electrical welding apparatuses using DC power stored as electrical energy in a battery pack.

Fig. 1 illustrates a prior art device of this type. The shown apparatus is a welding device having a welding unit 1 attached via a cord 2 to a battery pack 3.

While this is a versatile apparatus it can have some disadvantages in terms of it being somewhat bulky thereby being not so easy to move it around.

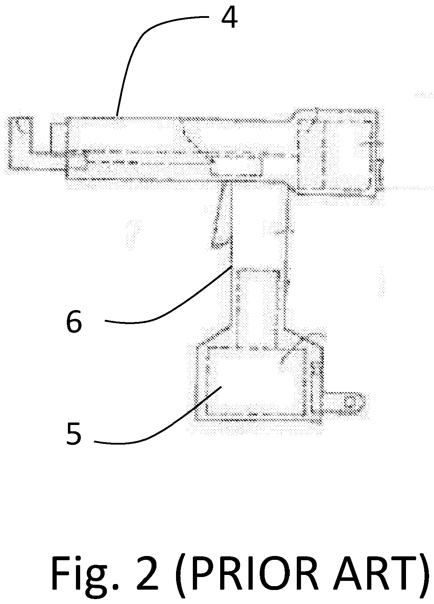

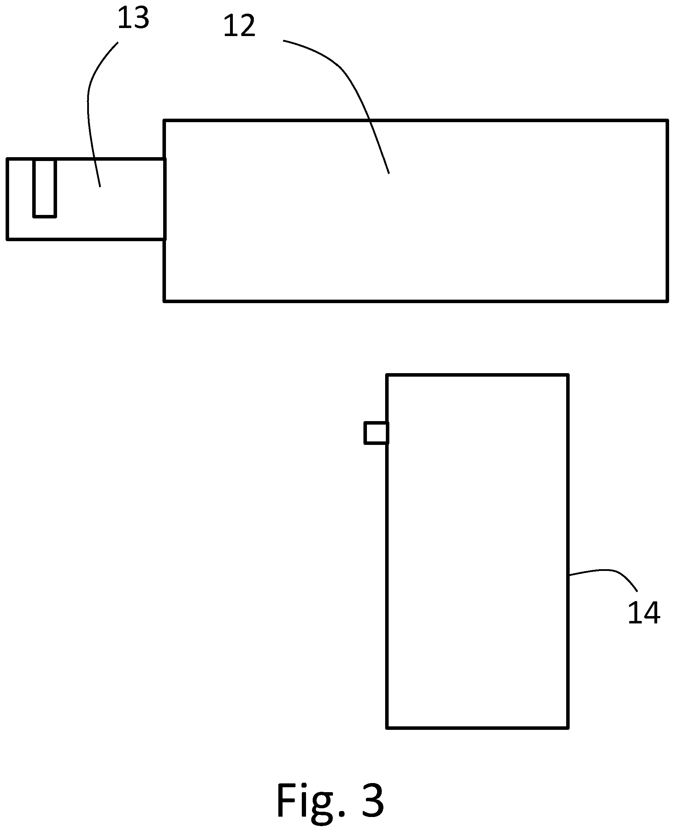

Thus, a device that is even more versatile is shown in Fig. 2 (JPH06106623 (A), Kawasumi). It comprises two parts, a first unit in the form of a power unit 5 with a battery pack, and a second unit in the form of an application unit 4, here a welder. In Fig. 3 this apparatus is shown in an assembled state, wherein the power unit is connected to the application unit. This apparatus is designed to have a power unit inserted in a slot in the handle 6 of the apparatus.

The present apparatus will now be described in more detail with reference to a hand held welding apparatus.

Fig. 3 shows the present apparatus generally designated 10 in a disassembled state.

It comprises a first part 12 which is an application unit, operated by DC power, in this case a welding unit for sealing plastic tubes for medical purposes, such as in the process of donating blood, the collecting bag must be sealed. This normally done by welding the tube so as to close off the tube. The actual welding element is indicated at 13.

The welder 12 further comprises a DC booster (not shown in Fig. 3) for providing appropriate operating voltage, and will be described further below.

The present apparatus also comprises a second part 14 which is a power unit capable of being charged with electric power and to deliver a DC voltage. When attached to the welding unit 12, the power unit functions as a handle for the apparatus. The power unit 14 comprises a power push button 16 for initiating transfer of power from the power unit 14 to the welding unit 12 when connected to the welding unit 12. The push button is suitably coupled to a micro-switch or the like.

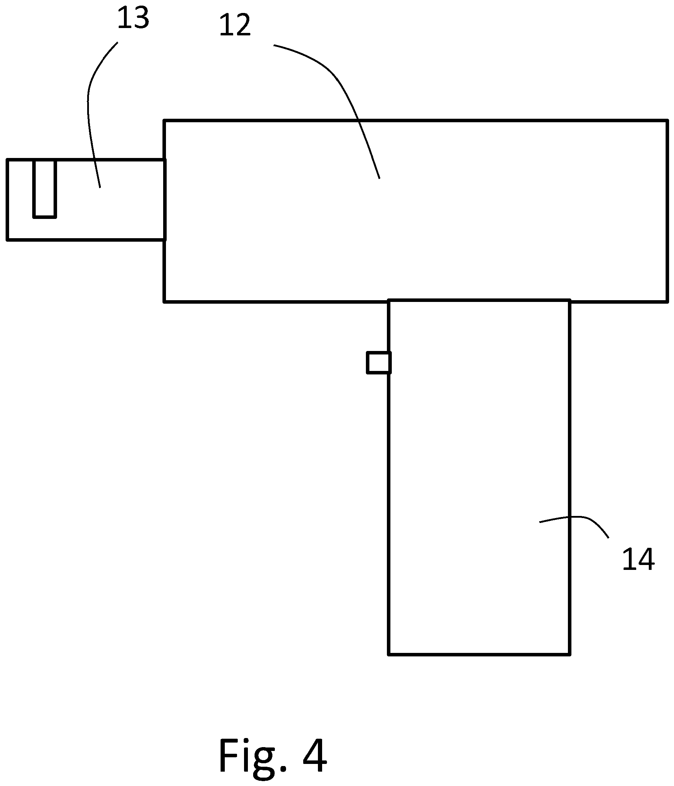

In Fig. 4 the apparatus 10 is shown in a state where the power unit 14 and the welding unit 12 have been connected to each other so as to form device that can be held in one hand where the power unit 14 forms the handle. In order to transfer electric power from the power unit 14 to the welding unit 12 a suitable interface is provided. This can be in the form of a male/female contact where the male contact can be provided on the power unit and the female contact on the welder, or vice versa. Thus, there is one contact for the positive pole and one for the negative pole, respectively, on the power unit.

The units 12, 14 are provided with mutually cooperating control circuitry capable of exchanging information between the units. In particular the circuitry is configured to detect whether the power unit is a correct one for the application in question or not, by receiving information from the power unit 14. This procedure is termed verification.

The exchanged information can be of different types. It could be the actual charging state of the unit, i.e. if it is able to deliver an appropriate voltage, and/or if the amount of stored energy is appropriate for an operation that is to be performed.

It can also be the provision of information regarding the type of unit, if there are several different types that utilize the same connection interface, such that one unit that is designed for one welding unit is not by mistake used for another welding unit requiring other performance.

Any information that is relevant for the proper use of the welding is conceivable to be used in this verification procedure.

The control circuitry in the welding unit can also be made capable of wireless communication with other equipment.

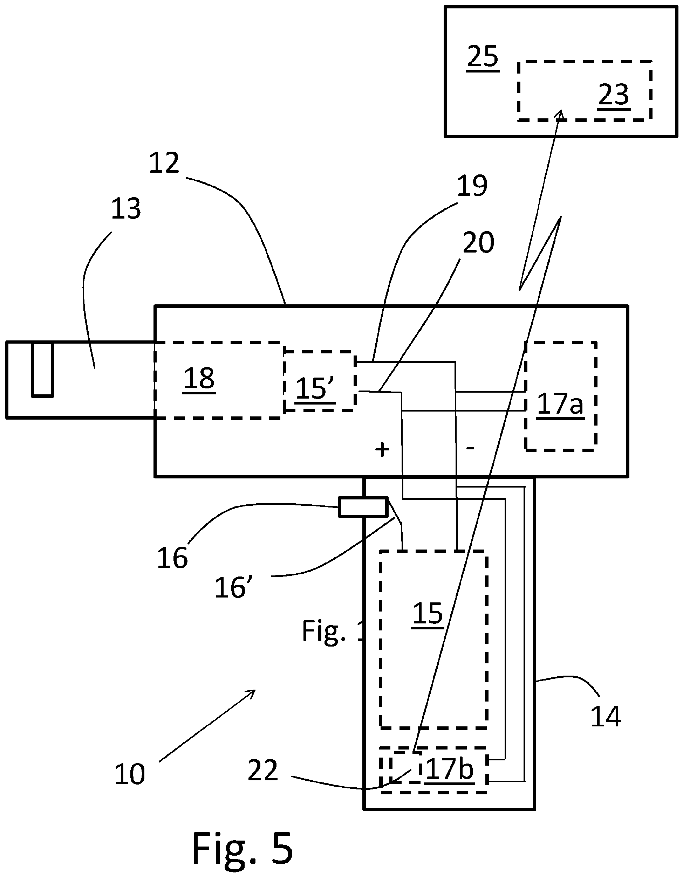

In Fig. 5 a schematic illustration of an apparatus is shown wherein the control circuitry is also indicated.

Thus, the first and second parts 12, 14, respectively, of the present apparatus are shown. The power unit 14 comprises a battery pack 15 having a positive + and negative pole -, respectively, and one control circuit 17b. The welding unit 12 comprises the actual welding apparatus 18 with the welding element 13, connected to the battery pack 15 in the power unit 14 via power lines 19, 20, a DC booster 15' and a control circuit 17a cooperating with the control circuit 17b in the power unit.

The DC booster 15' is provided to enable the use of power units that deliver a fairly low voltage by transforming the low voltage to a significantly higher voltage.

The information exchange between the control circuits can be via the power lines 19, 20 as superimposed signals (as illustrated in Fig. 5) and subsequently filtered out for feeding to the control circuitry. Alternatively, there can be provided dedicated contact elements (not shown in Fig. 5) in the interface for signal transfer, separate from the power contacts, or a combination of both.

The control circuitry is configured to block the initiation of operation of the welding unit if verification of correctness of the power unit is not obtained. Thus, when the push button 16 is pressed, schematically indicated is also a micro-switch 16' coupled to the physical push button 16, the switch will not close and the welding unit will not start to perform its function unless the verification of correctness is obtained.

Provided verification is obtained, when the power push button 16 on the power unit is pressed, the processor in the welding unit will activate the energy source (if verified) to power the welder via the DC booster 15'. The DC booster 15' makes it possible to integrate an energy source with a lower voltage, which can be made smaller and lighter.

The communication circuitry can be configured to communicate wirelessly with other equipment 25 such as blood transfusion equipment, to transfer relevant information from the welding apparatus to the other equipment. The relevant information may contain the number of approved welds (determined by the welding apparatus) to allow for blood bags to be safely removed.

The communication to externals is performed by means in the power unit 14, and could be integrated in the circuitry 17b. By providing the communication means in the power unit, it is possible to supply apparatuses without the ability to communicate, which provides a cheaper alternative for users in no need of such communication.

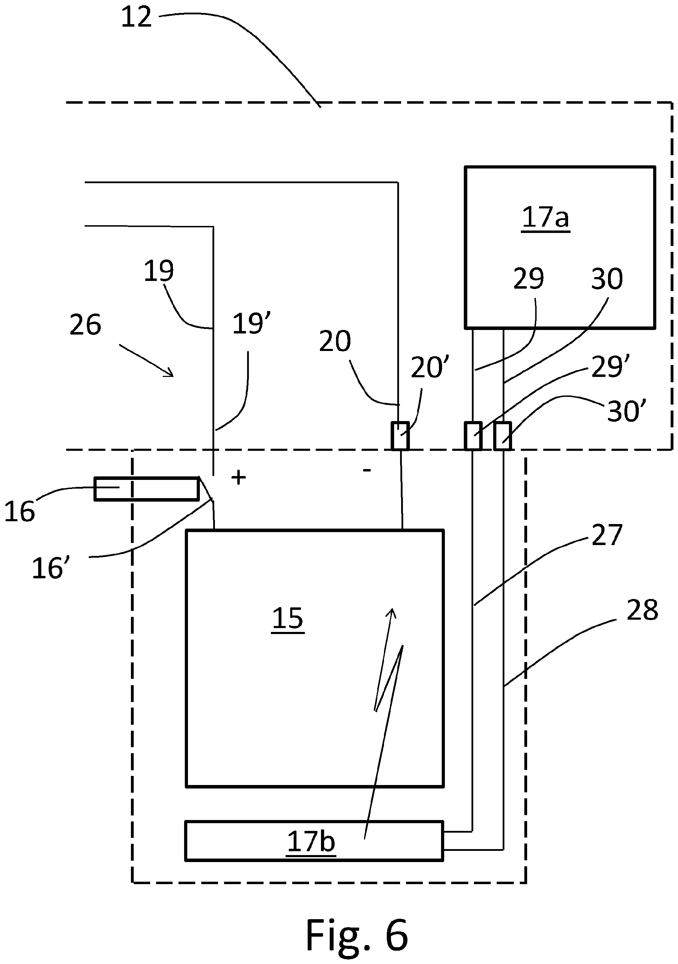

The wireless communication can be achieved by any known means such as radio means, blue-tooth, wi-fi, light communication means, preferably in the infrared region, or any other means available to the skilled man. Thus, there will be provided transceiver circuitry both in the power unit 14 and in the other equipment, designated 22 and 23, respectively. The wireless communication is symbolically indicated with a lightning arrow in Figs. 5 and 6.

In Fig. 6 the interface, designated 26 is schematically shown.

It comprises two power contacts 19', 20' coupled to the top of the battery pack 15, which connect to the power lines 19, 20, respectively, in the application unit 12 (schematically indicated with broken lines) via a female contact. Of course it could be the opposite, i.e. the male contacts could be provided in the application unit 12 and the female contacts in the power unit 14.

As already mentioned, information from a control circuit 17b can be transferred as superimposed signal on the output voltage, see Fig. 5, but as shown in Fig. 6 there can alternatively be provided one or more signal lines, here two are shown, 27, 28 that via contacts 29, 30 and signal lines 29', 30' in the welding unit transfer signals to the control circuit 17a in the application unit 12.

Alternatively, it is equally possible to use optical coupling between power unit and welding unit in the interface. This is standard technology and will not be discussed in detail herein. The skilled man could adapt an interface for optical, electrical or any other means of signal transfer.

## Claims

1. A cordless, hand held and electrically powered welding apparatus (12, 14), comprising:
a welding unit (12);
a power unit (14) for powering the welding unit (12); wherein
the power unit (14) is connectable directly to and disconnectable from the welding unit (12) via an interface;
the welding unit (12) and the power unit (14) each comprise circuitry (17a, 17b) that are configured to exchange information when mounted together via the interface, the information being used for a determination whether the power unit (14) is a correct one or not, wherein the determination is performed by the circuitry (17a) of the welding unit (12) in a verification step by receiving the information from the circuitry (17b) of the power unit (14), wherein the circuitry is configured to perform the verification step by checking at least one feature of the power unit (14) for correctness and to block activation of the welding unit (12) if the at least one feature is incorrect,
**characterized in that**
the at least one feature comprises charge status of the power unit (14), the information being indicative of the actual charging state of the power unit (14), wherein the power unit (14) is determined to be a correct one if the actual charging state of the power unit (14) indicates that the amount of stored energy is appropriate for a welding operation that is to be performed,
the power unit (14) is provided with a push button (16) that is configured to energize the welding unit (12) when pressed down only if a determination that the power unit (14) is a correct one has been registered by the circuitry (17a).

2. Welding apparatus according to any preceding claim, **characterized in that** the interface comprises at least two contact members capable of transferring power from the power unit (14) and means for exchanging the information between the power unit (14) and the welding unit (12).

3. Welding apparatus according to claim 2, **characterized in that** the interface comprises two contact members for power transfer and at least one further contact member for the information exchange.

4. Welding apparatus according to any preceding claim, **characterized in that** it comprises wireless communication means adapted to exchange information with other equipment.

5. Welding apparatus according to claim 4, **characterized in that** the wireless communication means is selected from the group consisting of radio means, blue-tooth, Wifi, light communication means, preferably in the infrared region.

6. Welding apparatus according to any preceding claim, **characterized in that** the welding unit further comprises a DC booster.

7. Welding apparatus according to any preceding claim, wherein the power unit's (14) provided push button (16) is coupled to a switch (16') configured to provide electrical connection between then power unit (14) and the welding unit (12) of the apparatus, when said button is pushed on.

8. Welding apparatus according to any of claims 1-7, wherein the power unit (14) forms a handle for the welding apparatus.

## Patentansprüche

1. Schnurloses, handgehaltenes und elektrisch betriebenes Schweißgerät (12, 14), umfassend:
eine Schweißeinheit (12);
eine Stromversorgungseinheit (14) zum Betreiben der Schweißeinheit (12); wobei die Stromversorgungseinheit (14) über eine Schnittstelle direkt mit der Schweißeinheit (12) verbindbar und von ihr trennbar ist,
wobei die Schweißeinheit (12) und die Stromversorgungseinheit (14) jeweils Schaltungsanordnungen (17a, 17b) umfassen, die zum Austausch von Informationen konfiguriert sind, wenn sie über die Schnittstelle zusammengefügt sind, wobei die Informationen für eine Bestimmung verwendet werden, ob die Stromversorgungseinheit (14) korrekt ist oder nicht, wobei die Bestimmung durch die Schaltungsanordnung (17a) der Schweißeinheit (12) in einem Verifizierungsschritt durch Empfangen der Informationen von der Schaltungsanordnung (17b) der Stromversorgungseinheit (14) durchgeführt wird, wobei die Schaltungsanordnung derart konfiguriert ist, um den Verifizierungsschritt durch Überprüfen mindestens eines Merkmals der Stromversorgungseinheit (14) auf Korrektheit durchzuführen und die Aktivierung der Schweißeinheit (12) zu blockieren, wenn das mindestens eine Merkmal nicht korrekt ist,
**dadurch gekennzeichnet, dass**
das mindestens eine Merkmal den Ladestatus der Stromversorgungseinheit (14) umfasst, wobei die Information den tatsächlichen Ladezustand der Stromversorgungseinheit (14) anzeigt, wobei die Stromversorgungseinheit (14) als korrekt bestimmt wird, wenn der tatsächliche Ladezustand der Stromversorgungseinheit (14) anzeigt, dass die Menge der gespeicherten Energie für einen durchzuführenden Schweißvorgang angemessen ist,
die Stromversorgungseinheit (14) mit einem Druckknopf (16) versehen ist, der so konfiguriert ist, dass er wenn er nach unten gedrückt ist die Schweißeinheit (12) nur dann aktiviert, wenn eine Bestimmung, dass die Stromversorgungseinheit (14) korrekt ist, durch die Schaltungsanordnung (17a) registriert wurde.

2. Schweißgerät nach einem der vorhergehenden Ansprüche, **dadurch gekennzeichnet, dass** die Schnittstelle mindestens zwei Kontaktelemente umfasst, die in der Lage sind, Leistung von der Stromversorgungseinheit (14) zu übertragen, und Mittel erfasst zum Austauschen der Informationen zwischen der Stromversorgungseinheit (14) und der Schweißeinheit (12).

3. Schweißgerät nach Anspruch 2, **dadurch gekennzeichnet, dass** die Schnittstelle zwei Kontaktelemente umfasst für eine Übertragung von Leistung und mindestens ein weiteres Kontaktelement für den Informationsaustausch.

4. Schweißgerät nach einem der vorhergehenden Ansprüche, **dadurch gekennzeichnet, dass** es drahtlose Kommunikationsmittel umfasst, die ausgebildet sind, Informationen mit anderen Geräten auszutauschen.

5. Schweißgerät nach Anspruch 4, **dadurch gekennzeichnet, dass** die drahtlosen Kommunikationsmittel ausgewählt sind aus der Gruppe bestehend aus Funkmitteln, Bluetooth, Wifi, Lichtkommunikationsmitteln, vorzugsweise im Infrarotbereich.

6. Schweißgerät nach einem der vorhergehenden Ansprüche, **dadurch gekennzeichnet, dass** die Schweißeinheit weiter einen DC-Booster umfasst.

7. Schweißgerät nach einem der vorhergehenden Ansprüche, wobei der Druckknopf (16) der Stromversorgungseinheit (14) mit einem Schalter (16') verbunden ist, der so konfiguriert ist, dass er eine elektrische Verbindung zwischen der Stromversorgungseinheit (14) und der Schweißeinheit (12) des Geräts herstellt, wenn der Druckknopf gedrückt ist.

8. Schweißgerät nach einem der Ansprüche 1 bis 7, wobei die Stromversorgungseinheit (14) einen Handgriff für das Schweißgerät bildet.

## Revendications

1. Appareil de soudage (12, 14) sans fil, portatif et électrique, comprenant :
une unité de soudage (12) ;
un bloc d'alimentation (14) pour alimenter l'unité de soudage (12) ; dans lequel
le bloc d'alimentation (14) peut être connecté directement à et peut être déconnecté de l'unité de soudage (12) par le biais d'une interface ;
l'unité de soudage (12) et le bloc d'alimentation (14) comprennent chacun un ensemble de circuits (17a, 17b) qui sont configurés pour échanger des informations lorsqu'ils sont montés conjointement par le biais de l'interface, les informations étant utilisées pour déterminer si le bloc d'alimentation (14) est un correct ou non, dans lequel la détermination est réalisée par l'ensemble de circuits (17a) de l'unité de soudage (12) dans une étape de vérification par réception des informations provenant de l'ensemble de circuits (17b) du bloc d'alimentation (14), dans lequel l'ensemble de circuits est configuré pour réaliser l'étape de vérification par contrôle de l'exactitude d'au moins une caractéristique du bloc d'alimentation (14) et pour bloquer l'activation de l'unité de soudage (12) si l'au moins une caractéristique est incorrecte,
**caractérisé en ce que**
l'au moins une caractéristique comprend le statut de charge du bloc d'alimentation (14), les informations étant indicatives de l'état de charge réel du bloc d'alimentation (14), dans lequel le bloc d'alimentation (14) est déterminé comme étant un correct si l'état de charge réel du bloc d'alimentation (14) indique que la quantité d'énergie stockée est appropriée pour une opération de soudage qui doit être réalisée,
le bloc d'alimentation (14) est doté d'un bouton-poussoir (16) qui est configuré pour exciter l'unité de soudage (12) lorsqu'il est pressé uniquement si une détermination que le bloc d'alimentation (14) est un correct a été enregistrée par l'ensemble de circuits (17a).

2. Appareil de soudage selon une quelconque revendication précédente, **caractérisé en ce que** l'interface comprend au moins deux éléments de contact capables de transférer de la puissance à partir du bloc d'alimentation (14) et des moyens pour échanger les informations entre le bloc d'alimentation (14) et l'unité de soudage (12).

3. Appareil de soudage selon la revendication 2, **caractérisé en ce que** l'interface comprend deux éléments de contact pour un transfert de puissance et au moins un autre élément de contact pour l'échange d'informations.

4. Appareil de soudage selon une quelconque revendication précédente, **caractérisé en ce qu'**il comprend des moyens de communication sans fil adaptés pour échanger des informations avec un autre équipement.

5. Appareil de soudage selon la revendication 4, **caractérisé en ce que** les moyens de communication sans fil sont sélectionnés dans le groupe constitué par des moyens formant radio, Bluetooth, Wifi, des moyens de communication lumineuse, de préférence dans le domaine infrarouge.

6. Appareil de soudage selon une quelconque revendication précédente, **caractérisé en ce que** l'unité de soudage comprend en outre un survolteur CC.

7. Appareil de soudage selon une quelconque revendication précédente, dans lequel le bouton-poussoir (16) prévu du bloc d'alimentation (14) est couplé à un commutateur (16') configuré pour fournir une connexion électrique entre le bloc d'alimentation (14) et l'unité de soudage (12) de l'appareil, lorsque ledit bouton est poussé.

8. Appareil de soudage selon l'une quelconque des revendications 1-7, dans lequel le bloc d'alimentation (14) forme une poignée pour l'appareil de soudage.
